# EUROPÄISCHE PATENTSCHRIFT

(11) **EP 2 374 694 B1**
(45) Veröffentlichungstag und Bekanntmachung des Hinweises auf die Patenterteilung: **23.03.2016**
(21) Anmeldenummer: 11401054.9
(22) Anmeldetag: 04.04.2011
(51) Int. Cl.: B62D 11/24

(54) **Lenkeinrichtung für ein selbstfahrendes Gerät**
Steering device for a self-propelled device
Dispositif de guidage pour un engin autopropulseur

(30) Priorität: 08.04.2010 DE 102010016363
(43) Veröffentlichungstag der Anmeldung: 12.10.2011
(73) Patentinhaber: Amazonen-Werke H. Dreyer GmbH & Co. KG, 49205 Hasbergen (DE)
(72) Erfinder: Klein, Laurent, FR-57910 HAMBACH (FR)

(56) Entgegenhaltungen:
- WO-A1-01/30636
- DE-A1-102006 013 080
- DE-U1- 9 102 354
- US-A1- 2001 040 057
- US-A1- 2009 241 708

## Beschreibung

Die Erfindung betrifft eine Lenkeinrichtung für ein selbstfahrendes Gerät gemäß des Oberbegriffes des Patentanspruches 1.

Eine derartige Lenkeinrichtung zeigt die WO 01/30636 A1. Hier werden die Lenksignale von dem Stromteiler der Lenkeinrichtung für die Einstellung der Lenkräder und der Ansteuerung der Hydraulikmotoren der Antriebsräder verwendet.

Eine weitere Lenkeinrichtung für ein selbstfahrendes Gerät ist beispielsweise durch die US 2009241708 A bekannt. Dieses Lenksystem ist relativ aufwändig aufgebaut. Weiterhin ist ein relativ hoher Kraftaufwand für die Einleitung und Durchführung der Lenkbewegung erforderlich, weil die Lenkung völlig auf mechanischem Wege aufgebaut ist. Diese Lenkeinrichtung weist ein Lenkrad auf, welches über Zahnräder und Lenkstangen die Vorderräder lenkt. Weiterhin ist über Zahnräder mit Mitnehmern eine weitere Steuereinrichtung mit Lenkstangen vorgesehen, welche auf die Regeleinrichtung der Antriebsräder einwirkt. Diese bekannte Lenkeinrichtung ist relativ aufwändig aufgebaut. Schwierig ist es, diese Lenkeinrichtung für Geräte einzusetzen, welche lenkbare Hinterräder aufweist und bei denen vorzugsweise nur die Vorderräder in regelbarer Weise angetrieben werden.

Eine weitere Lenkeinrichtung, mittels welcher sämtliche Räder des Fahrzeuges gelenkt werden ist beispielsweise durch die DE 102006013080 A1 bekannt. Wie die Lenkeinrichtung im einzelnen aufgebaut ist, ist diesem Dokument nicht zu entnehmen.

Der Erfindung liegt die Aufgabe zugrunde, die bekannte für eine auf die Vorder- und Hinterräder wirkende Lenkeinrichtung geschaffen wesentlich einfacher auszugestalten.

Diese Aufgabe wird erfindungsgemäß durch Merkmale des Kennzeichens des Anspruches 1 gelöst.

Infolge dieser Maßnahmen wird durch den Einsatz eines Hydraulikzylinders zur Betätigung der lenkbaren Hinterräder eine sehr leichte Betätigung der Lenkeinrichtung erreicht. Weiterhin wird eine sehr einfache Übertragung der Größe des Lenkeinschlages zur Ansteuerung der Regeleinrichtungen durch die Übertragungseinrichtung zwischen den Hinterrädern und den Regeleinrichtungen erreicht. Somit wird über die Übertragungseinrichtung der Lenkeinschlag auf die Regeleinrichtungen für die Antriebsräder in direkter Weise übertragen. Hierdurch werden die Regeleinrichtungen also immer exakt entsprechend des tatsächlichen Lenkeinschlages der lenkbaren Räder angesteuert.

Es ergibt sich somit eine einfache und wirkungsvolle Ausgestaltung der Übertragungseinrichtungen zur Übertragung des Lenkeinschlages auf die Regeleinrichtungen. Es lassen sich so die Regeleinrichtungen für die Antriebsvorrichtungen der Antriebsräder über die Übertragungseinrichtungen entsprechend des Lenkeinschlages der Lenkbarenräder ansteuern.

Eine einfache Umsetzung der unterschiedlich großen Regelgrößen bei dem Lenkeinschlag auf die Regeleinrichtung lässt sich dadurch erreichen, dass zwischen dem anderen Ende des Schwenkhebels und dem mit dem Schwenkhebel zusammenwirkenden Ende der Steuerstange ein um eine aufrechte Drehachse am Rahmen verdrehbar angeordnetes Steuerelement angeordnet ist, dass die Steuerstange mittels eines Gelenkes beabstandet zur Drehachse des Steuerelementes an dem Steuerelement angeordnet ist, dass das andere Ende des Kipphebels mit dem Steuerelement in zusammen wirkender Weise verbunden ist. Somit lässt sich eine einfache mechanische Übertragung des Lenkeinschlagwinkels zur Verwendung der Ansteuerung der Regeleinrichtungen erreichen.

Um in einfacher Weise die unterschiedlich großen Regelgrößen auf die Regeleinrichtungen beim Lenkeinschlag übertragen bzw. umsetzen zu können, ist vorgesehen, dass dem Steuerelement ein Kurvenbahnelement zu geordnet ist, dass das Kurvenbahnelement mit dem anderen Ende des Kipphebels zusammen wirkt. Somit lässt sich die entsprechende mechanische Übersetzung der Übertragungsbewegung verwirklichen.

Eine einfache Ausgestaltung der Kurvenbahn und des Steuerelementes lässt sich dadurch erreichen, dass das Kurvenbahnelement als in dem Steuerelement angeordnete nutartige Vertiefung ausgebildet ist, das in die nutartige Vertiefung ein an dem anderen Ende des Kipphebels angeordnetes stiftartiges Element fasst. Somit kann das Abgreifen der Kurvenbahn über das Steuerelement in einfacher Weise verwirklicht werden.

Um in einfacher Weise unterschiedliche Geschwindigkeiten des Gerätes erreichen zu können, ist vorgesehen, dass an dem Rahmen ein um eine zumindest annähernd horizontale und quer zur Fahrtrichtung verlaufende Schwenkachse verschwenkbares Stellelement angeordnet ist, dass an dem Stellelement das Gaspedal angreift, dass an dem Stellelement der den Schwenkhebel tragende Gelenkbolzen, dessen Gelenksachse mit der in Fahrtrichtung weisenden Achse, um welcher der Schwenkhebel verschwenkbar ist, zusammenfällt, angeordnet ist. Somit kann in einfacher Weise die Geschwindigkeit der Maschine verändert werden.

Eine besonders einfache Ausgestaltung der Betätigungselemente zum Lenken des Gerätes wird dadurch verwirklicht, dass das Betätigungselemente zum Betätigen der lenkbaren Hinterräder zum Lenken des Gerätes als Hydraulikzylinder ausgebildet ist.

Um einfacher Weise sowohl die lenkbaren Hinterrädern wie auch die angetriebenen Räder in einfacher Weise ansteuern zu können, ist vorgesehen, dass die Lenkeinrichtung ein Lenkelement zur Ansteuerung des zumindest einem der lenkbaren Hinterrädern zugeordneten Hydraulikzylinders und der den Vorderrädern zugeordneten Regeleinrichtungen aufweist.

Weitere Einzelheiten der Erfindung sind der Beispielsbeschreibung und den Zeichnungen zu entnehmen. Hierbei zeigen
- Fig. 1: das als Rasenmäher ausgebildete selbstfahrende Gerät in perspektivischer Darstellung,
- Fig. 2: das selbstfahrende Gerät ohne Mähwerk, Motorantriebseinheit, Rahmenverbindungselemente und Aufnahmebehälter in Seitenansicht,
- Fig. 3: das selbstfahrende Gerät nach Fig. 2 in der Draufsicht,
- Fig. 4: das selbstfahrende Gerät nach Fig. 2 in der Rückansicht,
- Fig. 5: die Lenkeinrichtung mit den Rädern des Fahrwerkes des selbstfahrenden Gerätes in Geradeausfahrt, in der Draufsicht und in Prinzipdarstellung,

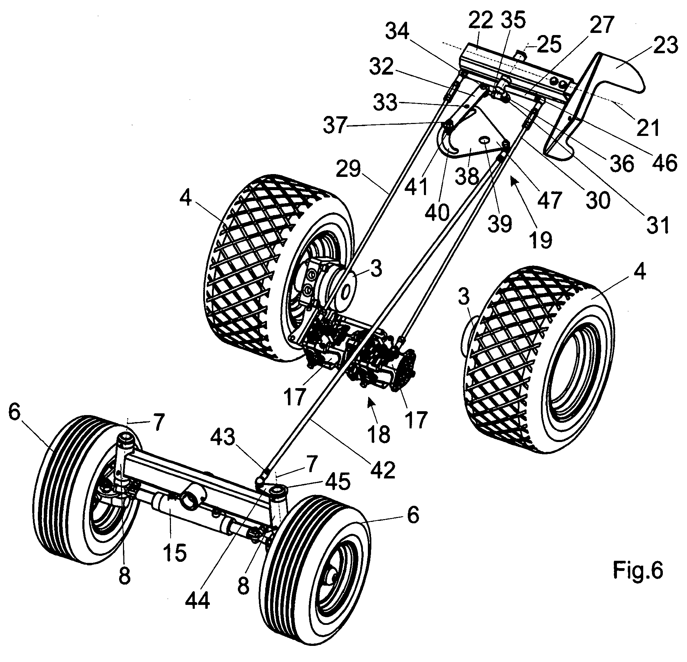

- Fig. 6: die Lenkeinrichtung mit den Rädern des Fahrwerkes des selbstfahrenden Gerätes in Geradeausfahrt, in perspektivischer Darstellung und in Prinzipdarstellung,
- Fig. 7: die Lenkeinrichtung mit den Rädern des Fahrwerkes des selbstfahrenden Gerätes beim durchfahren einer Linkskurve, in der Draufsicht und in Prinzipdarstellung und
- Fig. 8: die Lenkeinrichtung mit den Rädern des Fahrwerkes des selbstfahrenden Gerätes beim durchfahren einer Rechtskurve, in der Draufsicht und in Prinzipdarstellung.

Das selbstfahrende Gerät ist als Rasenmäher ausgebildet. Das Gerät weist den Rahmen 1 auf. Im vorderen Bereich 2 des Rahmens 1 ist auf jeder Seite ein von einem Hydraulikmotor 3 angetriebenes Vorderrad 4 angeordnet. Auf der Rückseite 5 des Rahmens 1 ist auf jeder Seite ein lenkbares Hinterrad 6 angeordnet. Das jeweilige Hinterrad 6 ist mittels eines eine aufrechte Achse 7 aufweist Gelenkes 8 am Rahmen 1 befestigt. Vor den Vorderrädern 4 ist an dem Rahmen 1 das Mähwerk 9 angeordnet. In dem Bereich zwischen den Vorder- 4 und Hinterrädern 6 ist die nicht dargestellte Motorantriebseinheit, welche einen Verbrennungsmotor und eine von dem Motor angetriebenen Hydraulikpumpe aufweist, angeordnet. Oberhalb der Vorderräder 4 ist auf dem Rahmen 1 die Bedienungseinheit 10 mit dem Fahrersitz 11 und dem Lenkrad 12 angeordnet. Hinter dem Fahrersitz 11 ist oberhalb des Rahmens 1 und den Hinterrädern 6 ein Aufnahmebehälter 13 zur Aufnahme des Mähgutes angeordnet.

Um die Hinterräder 6 zum Lenken bewegen zu können, das heißt, sie um die aufrechte Achsen 7 zu verdrehen, ist der Gelenkanordnung 14 der Gelenke 8 der Hinterräder 6 der Hydraulikzylinder 15 zugeordnet. Die Hydraulikkolben 16 des Hydraulikzylinders 15 sind über Verbindungselemente 16' mit der Gelenkanordnung 14 verbunden. Der Hydraulikzylinder 15 ist über nicht dargestellte Leitungen mit einem ebenfalls nicht dargestellten hydraulischen Betätigungsventil, welches von dem Lenkrad 12, welches auf der Vorderseite 2 des Rahmens 3 angeordnet ist, betätigt wird, verbunden. Das hydraulische Betätigungsventil ist mit der Hydraulikanlage des Gerätes in entsprechender Weise verbunden.

Den Vorderrädern 4 ist jeweils ein Hydraulikmotor 3 zugeordnet. Diese Hydraulikmotoren 3 sind über nicht dargestellte Leitungen mit den Regelventilen 17 der Regeleinrichtungen 18 und der Hydraulikanlage des Gerätes verbunden. Über die Regelventile 17 lässt sich die den Ölmotoren 3 zugeleitete Ölmenge einstellen. Durch die den Ölmotoren 3 über die Regelventile 17 zugeleitete Ölmenge wird somit die Drehgeschwindigkeit, das heißt die Vorwärtsgeschwindigkeit der Vorderräder 4 bestimmt. Durch eine unterschiedlich große Ölmenge, die jedem der den Vorderrädern 4 zugeordneten Ölmotoren 3 zugeleitet wird, lässt sich die Geschwindigkeit der beiden Vorderräder 4 bei einer Kurvenfahrt anpassen. Somit über die den angetriebenen Vorderrädern 4 zugeordneten Ölmotoren 3, die über die zugeordneten Regeleinrichtungen 18 in einstell- und/oder regelbar sind, in entsprechender Weise anzutreiben.

Um die Regeleinrichtungen entsprechend anzusteuern zu können, ist eine entsprechende Lenkeinrichtung 19 zur Übertragung der Lenkbewegung der Hinterräder 6 auf die den Vorderrädern 4 zugeordneten Regeleinrichtungen 18 vorhanden.

An dem Rahmen 1 ist auf der Vorderseite 2 ein um eine zumindest annähernd horizontale und quer zur Fahrtrichtung 20 verlaufende Schwenkachse 21 verschwenkbares Stellelement 22 angeordnet. An diesem Stellelement 22 ist das Gaspedal 23 angreifend angeordnet. An dem Stellelement 22 ist eine Gelenkhülse 24, deren Achse in Fahrtrichtung weist, angeordnet. In dieser Gelenkhülse 24 ist ein Gelenkbolzen 26, der einen Schwenkhebel 27 trägt, angeordnet. Die Gelenkachse des Gelenkbolzen 26 fällt mit der Achse 25 zusammen, um welcher der Schwenkhebel 27 verschwenkbar ist.

Der Schwenkhebel 27 ist Bestandteil der Übertragungseinrichtung 19 zur Übertragung des Lenkeinschlages der Hinterräder 6 auf die den angetriebenen Vorderrädern 4 zugeordneten Regeleinrichtungen 18. Dieser doppelseitige Schwenkhebel 27 ist um die vor erwähnte in Fahrtrichtung 20 liegende Achse verschwenkbar. An jedem Ende 28 des doppelseitigen Schwenkhebels 27 ist jeweils eine mit dem Betätigungshebel der Ventile 17 der Regeleinrichtung 18 der Ölmotoren 3 verbundene Übertragungsstange 29, 30 mittels eines Gelenkes angeordnet.

Weiterhin weist der doppelseitige Schwenkhebel 27 einen Verschwenkhebel 31 zum Verschwenken des Schwenkhebels 27 um die in Fahrtrichtung 20 weisende Achse 25 auf.

Im Bereich des Schwenkhebels 31 ist an dem Rahmen 1 ein schwenkbarer Kipphebel 32 mittels eines Gelenkes 33 angeordnet. Das eine Ende 34 des Kipphebels 32 ist über das Verbindungsglied an dem Ende 36 des Schwenkhebels 27 mittels eines Gelenkes befestigt. Das andere Ende 37 des Kipphebels 32 wirkt mit einem weiteren doppelseitigen Steuerelement 38 zusammen. Dieses doppelseitige Steuerelement 38 ist mittels der Gelenkverbindung 39 am Rahmen 1 verschwenkbar angeordnet. Weiterhin weist das Steuerelement 38 im Bereich des Endes 37 des Kipphebels 32 ein als Kurvenbahn ausgebildetes Kurvenbahnelement 40 auf. Dieses Kurvenbahnelement 40 wirkt mit dem anderen Ende 37 des Kipphebels 32 zusammen. Das Kurvenbahnelement 40 ist als in dem Steuerelement 38 angeordnete nutartige Vertiefung ausgebildet. In diese nutartige Vertiefung 40 greift ein an dem anderen Ende 37 des Kipphebels 32 angeordnetes stiftartiges Element 41 ein.

Weiterhin weist die Lenkeinrichtung 19 die Steuerstange 42 auf. Diese Steuerstange 42 ist mit ihrem hinteren Ende 43 an einem Geberhebel 44 befestigt. Dieser Geberhebel 44 ist drehfest mit der Schwenkwelle 45 der Gelenkanordnung 14 eines der Hinterräder 6 verbunden. Die Vorderseite 46 der Steuerstange 42 ist mittels eines Gelenkes an der dem Kurvenbahnelement 40 abgewandten Seite 47 des Steuerelementes 38 befestigt. Somit ist also der Schwenkhebel 27 von der Steuerstange 42, die mit einem der angesteuerten Hinterräder 6 verbunden ist, betätigbar. Über die Lenkeinrichtung 19 sind also die den Vorderrädern 4 zugeordneten Regeleinrichtungen 18 mittels der vor erwähnten Übertragungseinrichtungen durch den Lenkeinschlag der angesteuerten Hinterräder 6 betätigbar.

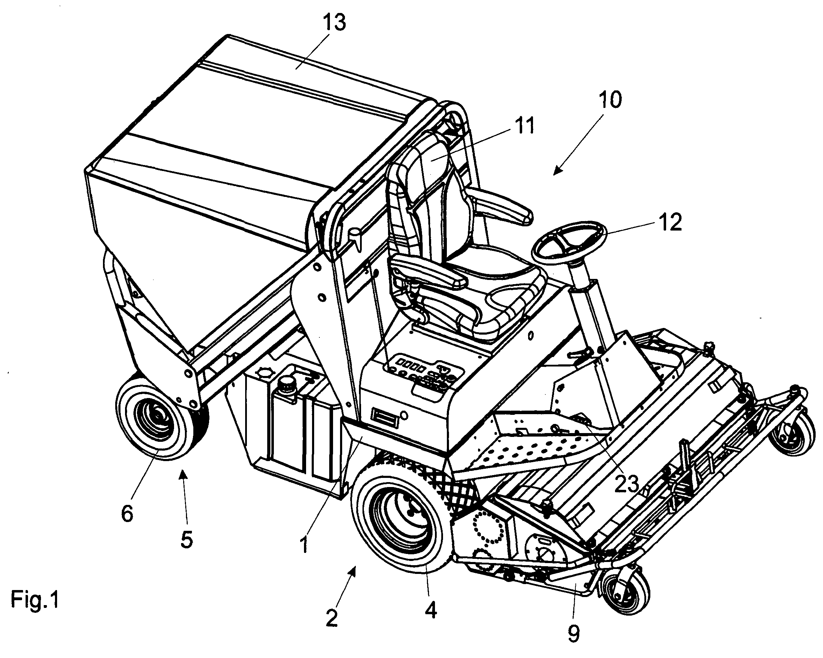

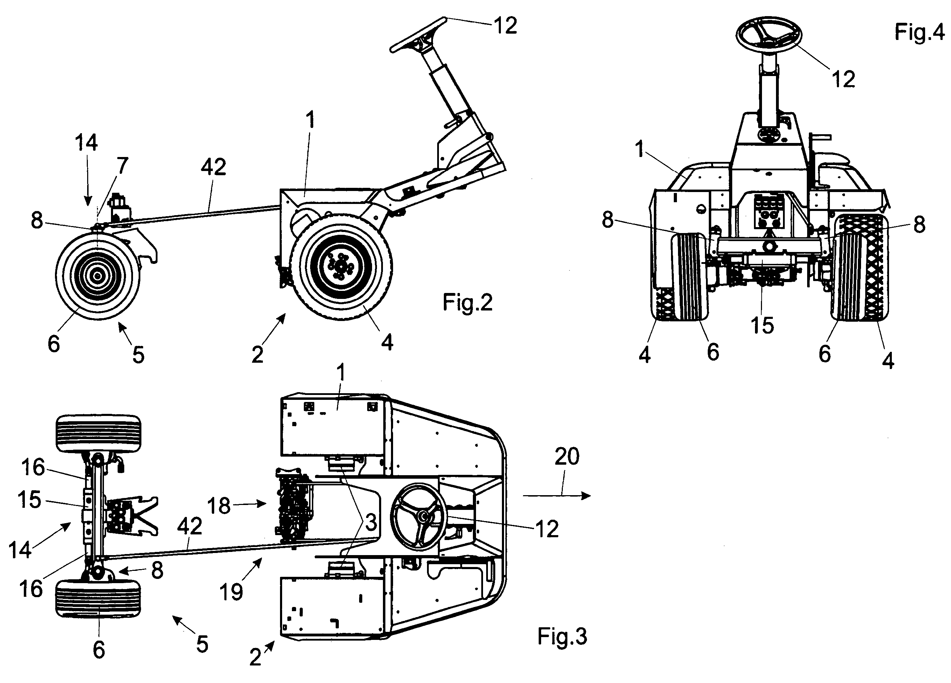

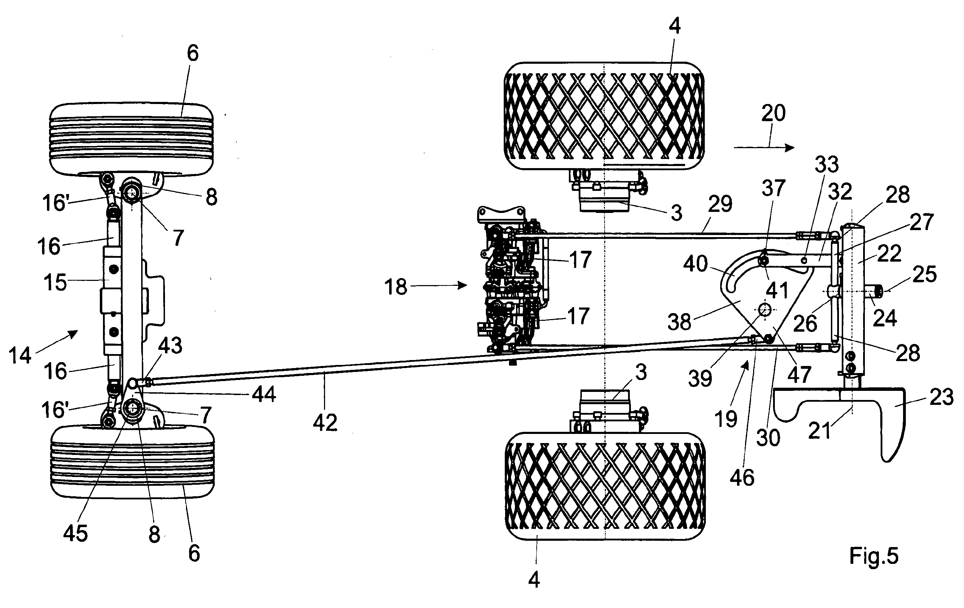

Die Funktionsweise der erfindungsgemäßen Lenkeinrichtung ist folgende:
Die Darstellungen in den Fig. 1-5 zeigen das Gerät bei Geradeausfahrt. Wenn in dieser Situation über das Gaspedal 23 die Geschwindigkeit verändert werden soll, wird das Stellelement 22 um die Achse 21 verschwenkt. Aufgrund des Abstandes des Schwenkhebels 27 zur Schwenkachse 21 werden über die an dem Schwenkhebel 27 angelenkten Übertragungsstange 29 und 30 betätigt, so dass hierüber die Regelventile 17 in gleicher Weise verstellt werden, so dass die den Ölmotoren 3 jeweils zugeführte Ölmenge in gleicher Weise geändert wird, so dass die Geschwindigkeit des Gerätes für die Geradeausfahrt verändert wird.

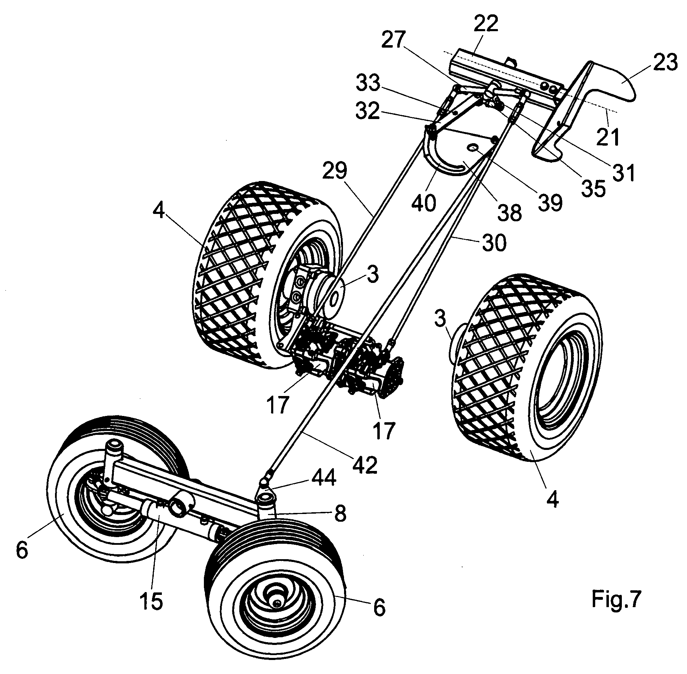

Um entsprechend Figur 7 eine Linkskurve zu durchfahren, wird das Lenkrad 12 entsprechend betätigt, so dass über den Hydraulikzylinder 15 die Hinterräder 6 entsprechend eingeschlagen werden, wie für eine derartige Situation in Fig. 7 dargestellt ist. Wie in Fig. 7 erkennbar ist, werden über den Geberhebel 44 und die Steuerstange 42 das Steuerelement 38 um die Achse 39 verschwenkt. Hierdurch wird durch das Kurvenbahnelement 42 der Kipphebel 32 um das Gelenk 33 verschwenkt. Durch das Verschwenken des Kipphebels 32 wird über das Verbindungsglied 35 der Schwenkhebel 27 durch der Hebel 31 um die Achse 25 verschwenkt, wie in Fig. Zwei dargestellt ist. Hierdurch ergibt sich eine wirksame Längenänderung zwischen dem Stellelement 22 und den Betätigungshebeln der Regelventile 17 der Regeleinrichtung 18, so dass die Regelventile 17 unterschiedlich für die beiden Ölmotore 3 der Vorderräder 4 eingestellt werden. Somit sind unterschiedliche Geschwindigkeiten für die Vorderräder vier erreichbar.

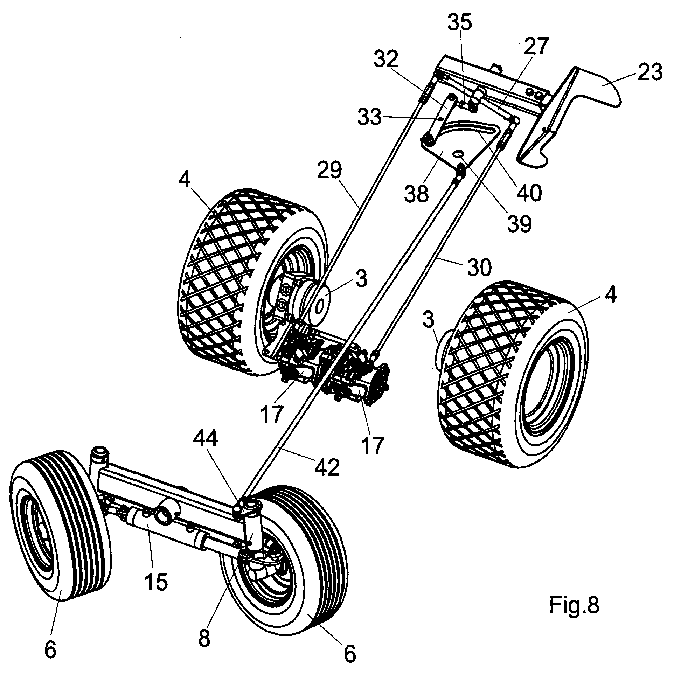

Wird entsprechend Fig. 8 eine Rechtskurve durchfahren werden soll, wird das Lenkrad 12 entsprechend betätigt, so dass über den Hydraulikzylinder 15 die Hinterräder 6 entsprechend eingeschlagen werden, wie für eine derartige Situation in Fig. 8 dargestellt ist. Wie in Fig. 8 erkennbar ist, werden über den Geberhebel 44 und die Steuerstange 42 das Steuerelement 38 um die Achse 39 verschwenkt. Hierdurch wird durch das Kurvenbahnelement 42 der Kipphebel 32 um das Gelenk 33 verschwenkt. Durch das Verschwenken des Kipphebels 32 wird über das Verbindungsglied 35 der Schwenkhebel 27 durch der Hebel 31 um die Achse 25 verschwenkt, wie in Fig. Zwei dargestellt ist. Hierdurch ergibt sich eine wirksame Längenänderung zwischen dem Stellelement 22 und den Betätigungshebeln der Regelventile 17 der Regeleinrichtung 18, so dass die Regelventile 17 unterschiedlich für die beiden Ölmotore 3 der Vorderräder 4 eingestellt werden. Somit sind unterschiedliche Geschwindigkeiten für die Vorderräder vier erreichbar.

Somit ist also leicht zu verstehen, dass mit der erfindungsgemäßen Lenkeinrichtung sowohl Geradeausfahrt sowie das durchfahren von rechts und Linkskurven in einfacher Weise möglich ist.

## Patentansprüche

1. Lenkeinrichtung für ein selbstfahrendes Gerät, wie beispielsweise Rasenmäher und/oder Kehrmaschine mit einem Rahmen, zwei angetriebenen Vorderrädern, die jeweils von einem Ölmotor mit zugeordneten Regeleinrichtungen in einstell- und/oder regelbarer Weise antreibbar sind, und mittels eines Hydraulikzylinders zum Lenken des Gerätes ansteuerbaren lenkbaren Hinterrädern, wobei die Lenkeinrichtung (19) ein Lenkelement (12) zur Ansteuerung des zumindest einem der lenkbaren Hinterrädern (6) zugeordneten Hydraulikzylinders (15) und der den Vorderrädern (4) zugeordneten Regeleinrichtungen (17, 18) aufweist, wobei die den Vorderrädern (4) zugeordneten Regeleinrichtungen (17, 18) mittels Übertragungseinrichtungen (27, 32, 38, 42) durch den Lenkeinschlag der angesteuerten Hinterräder (6) betätigbar sind, **dadurch gekennzeichnet, dass** die Übertragungseinrichtungen (19) einen um eine liegende und in Fahrtrichtung (20) weisende Achse (25) verschwenkbaren doppelseitigen Schwenkhebel (27) aufweisen, dass an jedem Ende (28) des Schwenkhebels (27) eine mit einer der Regeleinrichtungen (17, 18) der Ölmotoren (3) verbundene Übertragungsstange (29, 30) mittels eines Gelenkes angeordnet ist, dass der doppelseitige Schwenkhebel (27) einen Verschwenkhebel (31) zum Verschwenken des Schwenkhebels (27) um die in Fahrtrichtung (20) weisende Achse (25) aufweist, dass mit dem Ende des Schwenkhebels (38) das eine Ende eines am Rahmen (1) um eine aufrechte Achse schwenkbar gelagerten Kipphebels (32) mittels eines Gelenkes (33) zusammenwirkt, dass das andere Ende des Schwenkhebels (38) von einer Steuerstange (42), die zumindest mit einem Ende (43) mit den angesteuerten Hinterrädern (6) verbunden ist, betätigbar ist.

2. Lenkeinrichtung nach Anspruch 1, **dadurch gekennzeichnet, dass** zwischen dem anderen Ende des Schwenkhebels und dem mit dem Schwenkhebel zusammenwirkenden Ende der Steuerstange (42) ein um eine aufrechte Drehachse am Rahmen verdrehbar angeordnetes Steuerelement (38) angeordnet ist, dass die Steuerstange (42) mittels eines Gelenkes beabstandet zur Drehachse (39) des Steuerelementes (38) an dem Steuerelement (38) angeordnet ist, dass das andere Ende des Kipphebels (32) mit dem Steuerelement (38) in zusammen wirkender Weise verbunden ist.

3. Lenkeinrichtung nach Anspruch 2, **dadurch gekennzeichnet, dass** dem Steuerelement (38) ein Kurvenbahnelement (40) zu geordnet ist, dass das Kurvenbahnelement (40) mit dem anderen Ende des Kipphebels (32) zusammen wirkt.

4. Lenkeinrichtung nach Anspruch 3, **dadurch gekennzeichnet, dass** das Kurvenbahnelement (40) als in dem Steuerelement (38) angeordnete nutartige Vertiefung ausgebildet ist, dass in die nutartige Vertiefung (40) ein an dem anderen Ende des Kipphebels (32) angeordnetes stiftartiges Element (41) fasst.

5. Lenkeinrichtung nach zumindest einem der vorstehenden Ansprüche 2 bis 4, **dadurch gekennzeichnet, dass** an dem Rahmen (1) ein um eine zumindest annähernd horizontale und quer zur Fahrtrichtung (20) verlaufende Schwenkachse (21) verschwenkbares Stellelement (22) angeordnet ist, dass an dem Stellelement (22) ein Gaspedal (23) angreift, dass an dem Stellelement (22) ein den Schwenkhebel (27) tragende Gelenkbolzen (26), dessen Gelenksachse mit einer in Fahrtrichtung (20) weisenden Achse (25), um welcher der Schwenkhebel (27) verschwenkbar ist, zusammenfällt, angeordnet ist.

## Claims

1. Steering device for a self-propelling unit, such as a lawnmower and/or sweeper having a frame, two driven front wheels which can be driven in an adjustable and/or controllable manner in each case by an oil motor with associated control devices, and steerable rear wheels which can be actuated by means of a hydraulic cylinder in order to steer the unit, the steering device (19) having a steering element (12) for actuating the hydraulic cylinder (15) which is assigned to at least one of the steerable rear wheels (6) and the control devices (17, 18) which are assigned to the front wheels (4), it being possible for the control devices (17, 18) which are assigned to the front wheels (4) to be actuated by means of transmission devices (27, 32, 38, 42) as a result of the steering angle of the actuated rear wheels (6), **characterized in that** the transmission devices (19) have a double-sided pivoting lever (27) which can be swivelled about an axis (25) which is horizontal and points in the driving direction (20), **in that** a transmission rod (29, 30) which is connected to one of the control devices (17, 18) of the oil motors (3) is arranged by means of a joint at each end (28) of the pivoting lever (27), **in that** the double-sided pivoting lever (27) has a swivelling lever (31) for swivelling the pivoting lever (27) about the axis (25) which points in the driving direction (20), **in that** the one end of a tilting lever (32) which is mounted on the frame (1) such that it can be pivoted about a vertical axis interacts by means of a joint (33) with the end of the pivoting lever (38), and **in that** the other end of the pivoting lever (38) can be actuated by a control rod (42) which is connected at least with one end (43) to the actuated rear wheels (6).

2. Steering device according to Claim 1, **characterized in that** a control element (38) which is arranged such that it can be rotated about a vertical rotational axis on the frame is arranged between the other end of the pivoting lever and that end of the control rod (42) which interacts with the pivoting lever, **in that** the control rod (42) is arranged on the control element (38) spaced apart from the rotational axis (39) of the control element (38) by means of a joint, and **in that** the other end of the tilting lever (32) is connected in an interacting manner to the control element (38).

3. Steering device according to Claim 2, **characterized in that** the control element (38) is assigned a cam track element (40), and **in that** the cam track element (40) interacts with the other end of the tilting lever (32).

4. Steering device according to Claim 3, **characterized in that** the cam track element (40) is configured as a groove-like depression which is arranged in the control element (38), and **in that** a pin-like element (41) which is arranged at the other end of the tilting lever (32) engages into the groove-like depression (40).

5. Steering device according to at least one of the preceding Claims 2 to 4, **characterized in that** an actuating element (22) which can be pivoted about a pivot axis (21) which is at least approximately horizontal and runs transversely with respect to the driving direction (20) is arranged on the frame (1), **in that** an accelerator pedal (23) acts on the actuating element (22), and **in that** a joint pin (26) which supports the pivoting lever (27) is arranged on the actuating element (22), the joint axis of which joint pin (26) coincides with an axis (25) which points in the driving direction (20) and about which the pivoting lever (27) can be swivelled.

## Revendications

1. Dispositif de guidage pour un engin autopropulseur, comme par exemple une tondeuse à gazon et/ou une balayeuse, avec un châssis, deux roues avant entraînées, qui peuvent être entraînées respectivement par un moteur à huile avec réglage et/ou régulation avec des dispositifs de réglage associés, et des roues arrière orientables pouvant être commandées au moyen d'un cylindre hydraulique pour le guidage de l'engin, dans lequel le dispositif de guidage (19) présente un élément de guidage (12) pour la commande du cylindre hydraulique (15) associé à au moins une des roues arrière orientables (6) et des dispositifs de réglage (17, 18) associés aux roues avant (4), dans lequel les dispositifs de réglage (17, 18) associés aux roues avant (4) peuvent être actionnés au moyen de dispositifs de transmission (27, 32, 38, 42) par le braquage des roues arrière commandées (6), **caractérisé en ce que** les dispositifs de transmission (19) présentent un levier pivotant bilatéral (27) pouvant pivoter autour d'un axe (25) horizontal et orienté dans la direction de marche (20), **en ce qu'**une barre de transmission (29, 30) reliée à un des dispositifs de réglage (17, 18) des moteurs à huile (3) est disposée à chaque extrémité (28) du levier pivotant (27) au moyen d'une articulation, **en ce que** le levier pivotant bilatéral (27) présente un levier de basculement (31) pour faire basculer le levier pivotant (27) autour de l'axe (25) orienté dans la direction de marche (20), **en ce que** la première extrémité d'un levier basculant (32) monté sur le châssis (1) de façon pivotante autour d'un axe vertical coopère au moyen d'une articulation avec l'extrémité du levier pivotant (38), **en ce que** l'autre extrémité du levier pivotant (38) peut être actionnée par une barre de commande (42), qui est reliée au moins par une extrémité (43) aux roues arrière commandées (6).

2. Dispositif de guidage selon la revendication 1, **caractérisé en ce qu'**un élément de commande (38) disposé de façon tournante autour d'un axe de rotation vertical sur le châssis est disposé entre l'autre extrémité du levier pivotant et l'extrémité de la barre de commande (42) coopérant avec le levier pivotant, **en ce que** la barre de commande (42) est disposée sur l'élément de commande (38) à distance de l'axe de rotation (39) de l'élément de commande (38) au moyen d'une articulation, **en ce que** l'autre extrémité du levier basculant (32) est reliée à l'élément de commande (38) pour coopérer avec lui.

3. Dispositif de guidage selon la revendication 2, **caractérisé en ce qu'**un élément de came (40) est associé à l'élément de commande (38), et **en ce que** l'élément de came (40) coopère avec l'autre extrémité du levier basculant (32).

4. Dispositif de guidage selon la revendication 3, **caractérisé en ce que** l'élément de came (40) est formé par un creux en forme de rainure disposé dans l'élément de commande (38), **en ce qu'**un élément en forme de tige (41) disposé sur l'autre extrémité du levier basculant (32) s'engage dans le creux en forme de rainure (40).

5. Dispositif de guidage selon au moins une des revendications précédentes 2 à 4, **caractérisé en ce qu'**un élément de réglage (22) pouvant pivoter autour d'un axe de pivotement (21) au moins approximativement horizontal et orienté transversalement à la direction de marche (20) est disposé sur le châssis (1), **en ce qu'**une pédale d'accélérateur (23) agit sur l'élément de réglage (22), **en ce qu'**un pivot d'articulation (26) portant le levier pivotant (27) et dont l'axe d'articulation coïncide avec un axe (25) orienté dans la direction de marche (20), autour duquel le levier pivotant (27) peut pivoter, est disposé sur l'élément de réglage (22).
